# EUROPEAN PATENT SPECIFICATION

(11) **EP 1 251 658 B1**
(45) Date of publication and mention of the grant of the patent: **13.04.2005**
(21) Application number: 01128007.0
(22) Date of filing: 24.11.2001
(51) Int. Cl.: H04L 12/28, H04L 29/06

(54) **System and method for providing devices in a home network with a service**
System und Methode zur Dienstbereitstellung für Geräte in einem Hausnetz
Système et procédé pour fournir un service aux dispositifs dans un réseau domotique

(30) Priority: 17.04.2001 KR 2001020551
(43) Date of publication of application: 23.10.2002
(73) Proprietor: SAMSUNG ELECTRONICS CO., LTD., Suwon-City, Kyungki-do (KR)
(72) Inventor: Choi, Moon-jeong, HNS Project Team, Yongin-city, Gyunggi-do (KR)
(74) Representative: Parkinson, Neil Scott

(56) References cited:
- EP-A- 1 021 021
- WO-A-00/04427
- WO-A-00/59230
- WO-A-01/13374
- US-B1- 6 198 479
- KRESKEN T: "Überblick Push-Technologie" XP002198350 Retrieved from the Internet: <URL: http://www.ubka.uni-karlsruhe.de/vvv/ira/1 998/2/2.ps> [retrieved on 2002-05-07] * the whole document *

## Description

The present invention relates to a method for providing a service via the Internet, and, more particularly, to a system and a method for providing a service to devices within a home network that transmits and receives the service based on information about the devices subscribed to the service.

Recently, due to advanced communication technology, use of many information devices such as computers, faxes, modems, telephones, etc. in a network has exploded, especially in small office home offices (SOHOs) or homes. Here, for the convenience of explanation, the networks established in the SOHOs or the homes will be representatively called 'home networks' throughout this description.

The devices within a home network can use the service on line, i.e., through the Internet. For this, the devices in the home network can subscribe to an external server while on or off-line. The devices can also cancel the subscription to the external server while on or off line.

The service providing server then manages the registration of the subscriber devices on the basis of certain information, that is the home identification numbers and the device identification numbers, and provides service only to the registered subscriber devices. Once the identification number is given to a certain device, the identification number cannot be used for other devices.

The above-mentioned way, however, has a problem in that the service providing server has to process the subscription of each device in each home network to provide the service to the device. Accordingly, when the subscriber devices increase, the service providing server has to handle the increase in the jobs of maintaining the subscriber devices and processing the service for the respective subscriber devices.

There is another inconvenience of the service recipient. That is, each new device has to newly subscribe to the service providing server to receive the same service that the other previously equipped devices in the home network receive.

There is the same inconvenience when any device cancels its subscription while receiving the same service from the service providing server.

Meanwhile, since the service providing server maintains the subscriber devices by IDs, there could be a serious problem if the IDs are exposed to those such as hackers who have a malicious intent to steal the IDs.

WO-A-00/04427 discloses a method and apparatus allowing for the monitoring and control of electrical appliances or utilities. It is achieved by using a master web server that can communicate with remote slave nodes using a protocol for control and automation over networks of different media including wire, radio, microwave and power lines. This virtual internet link responds to request from the server and remotes to replicate information as though the remote node is connected to the internet. The virtual link is used for remote information reading as well as home automation and security reflected in the master server. Remote nodes act on the internet database information through a master/slave/exception protocol supporting automation, metering, security, e-cash transfers and internet back-channel requests.

EP-A-1021021 discloses an apparatus that enables, in a network, state notifications to trigger data transfer from a source server or from an intermediate proxy server to an often disconnected client computer, based on the clients entering a particular state. The intermediate proxy server queues push requests from source servers to target clients. The state notifications include state information based on different criteria. The state notifications can reduce the network polling load by initiating each poll.

US-B1-6198479 discloses a method and system for commanding and controlling diverse home devices on a home network to perform a service. According to the method, a client device that is capable of displaying a user interface is connected to a home network. A software agent is executed on the client device to cause a user interface to be displayed on a client device. First and second homing devices connected to the home network are selected from the user interface, and control and command data are sent from the client device to the first and second home devices to cause these devices to communicate with each other to perform the service.

Kresken T: "Uberblick Push-Technologie" provides an introduction to push procedures.

WO-A-0059230 discloses a method of managing resources within a network for consumer electronic media devices such that users are presented with a "service-centric" or "content-centric" view of the network. User applications of a home server receive service-specific (or, content-specific) requests from a user and convert the service-specific requests into information that identifies the necessary resources for providing the service. The software resource manager then determines whether the necessary resources are available upon receiving the requests. If the necessary resources are available, the software resource manager sends control signals to the source and destination devices causing them to perform the requested media services.

Embodiments of the present invention aim to overcome or at least diminish the above-mentioned problems of the related art. Accordingly, it is an aim of embodiments of the present invention to provide a system and a method thereof for providing devices within a home network with service in a manner that restricts the burden of maintenance that is increased due to addition or reduction of the devices subscribed to the same service, and also to simplify procedures for service reception, and a system and a method thereof for receiving the service in the home network.
In a first aspect, the present invention provides a system for providing a home network with a service, the home network having a plurality of devices (LD1, LD2, ....Ldn) that are connected to one another, the system comprising:
a service providing server (RS) arranged to store address information about a home network (1-n) subscribed to the service, to store information about a service recipient device, characterised in that the service providing server (RS) is arranged to transmit a notifying message prior to providing the service to inquire about whether the service recipient device (LD) can receive the service or not, the notifying message containing address information about the home network that the service recipient device belongs to and additional identifying information about the service recipient device; and
a lookup server (LS) of the home network (1-n) arranged to store an ID and a dynamic internet protocol (IP) address of one of the plurality of devices that corresponds to the additional identifying information registered in the service providing server, to receive the notifying message from the service providing server, and in response to the notifying message, to determine whether there is a device (LD) corresponding to the additional identifying information contained in the notifying message, and if there is such a device, arranged to convert the ID of the corresponding device into an IP address and to transmit the converted IP address, wherein the service providing server (RS) is arranged to provide the service after receiving a response message from the service recipient device, the response message indicating that the service recipient device can receive the service.

Suitably, the additional identifying information is used for one of the plurality of devices of a same kind that intends to receive a same type of service.

Suitably, wherein the additional identifying information includes information about at least one of a device type, a device property, a user name, a vendor, and a model name.

Suitably, the service is a push service that provides a certain service to said at least one of the plurality of service recipient devices repeatedly in a predetermined period.

According to the present invention in a second aspect, there is provided a method for providing a home network with a service, the home network having a plurality of devices (LD1, LD2, ....Ldn) that are connected to one another, the system comprising:
a service providing server (RS) storing address information about a home network (1-n) subscribed to the service and information about a service recipient device, characterised in that the service providing server (RS) transmits a notifying message prior to providing the service to inquire about whether the service recipient device (LD) can receive the service or not, the notifying message containing address information about the home network that the service recipient device belongs to and additional identifying information about the service recipient device; and
a lookup server (LS) of the home network (1-n) storing an ID and a dynamic internet protocol (IP) address of one of the plurality of devices that corresponds to the additional identifying information registered in the service providing server, characterised in that the lookup server (LS) receives the notifying message from the service providing server, and in response to the notifying message determining whether there is a device (LD) corresponding to the additional identifying information contained in the notifying message, and if there is such a device, the lookup server (LS) converts the ID of the corresponding device into an IP address and transmits the converted IP address, wherein the service providing server (RS) provides the service after receiving a response message from the service recipient device, the response message indicating that the service recipient device can receive the service.

Suitably, the additional identifying information is used for one of the plurality of devices of a same kind that intends to receive a same type of service.

Suitably, wherein the additional identifying information includes information about at least one of a device type, a device property, a user name, a vendor, and a model name.

Suitably, the service is a push service that provides a certain service to said at least one of the plurality of service recipient devices repeatedly in a predetermined period.

For a better understanding of the invention, and to show how embodiments of the same may be carried into effect, reference will now be made, by way of example, to the accompanying diagrammatic drawings in which:
Figure 1 is a view showing the construction of a system that provides devices in a home network with service in accordance with a preferred embodiment of the present invention;
Figure 2 is a view showing one example of a database having a lookup server of Figure 1; and
Figure 3 is a flow chart for explaining a method for providing the home network with service in accordance with the preferred embodiment of the present invention.

A detailed description according to the preferred embodiment of the present invention of a system and a method thereof for providing devices in the home network will follow by way of example only by referring to the attached drawings.

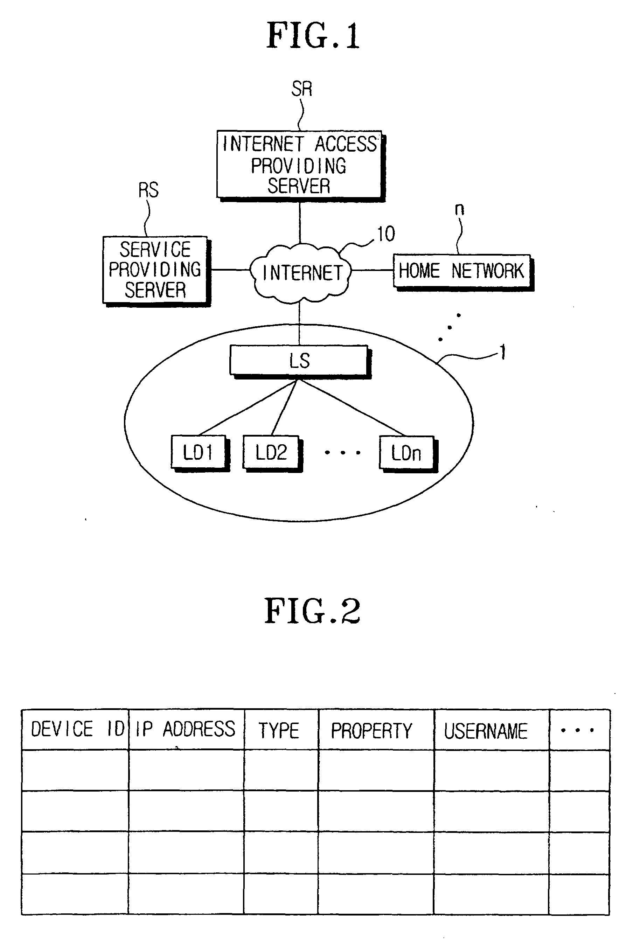

Figure 1 is a view showing the construction of the system that provides the devices within the home network with the service in accordance with the preferred embodiment of the present invention.

As shown in Figure 1, interconnected to each other through the Internet 10 are: a remote server (RS) for providing a service, a service root (SR) for providing access to the Internet 10, and a plurality of home networks (1-n). Each home network (1-n) includes a plurality of devices LD1, LD2, ... LDn and a lookup server (LS) .

The remote server RS exists outside the home networks (1-n), and provides the service through the Internet 10.
The remote server RS, in particular, provides the home network (1-n) with the service through the Internet 10. The remote server RS especially provides the subscriber home network with the service.

The remote server RS provides a push service. While the average service providing method provides the services upon request of the users, the push service is regularly provided to the subscriber devices in a predetermined period, or at one or more predetermined times.

Examples of a push service can be found in the information providing service that are provided regularly, such as a 'Today's Fortune Telling', a 'Stock Transaction', a 'Weather Report', 'Sports News' or the like.

Another example can also be found in other types of devices such as a lamp that is set to be turned on in a predetermined period, or at one or more predetermined times.

The remote server RS transmits a NOTIFY message to the subscriber home networks (1-n) in order to check whether the subscriber home networks (1-n) are placed in condition for service reception. The NOTIFY message notifies that the service is going to be provided.

It is preferable that the RS transmits the NOTIFY message to the subscriber home networks regularly in a predetermined period.

The NOTIFY message contains more than one piece of additional identifying information such as device type, device property, user name, vendor, model name, serial number, etc. Preferably, any information generally used for the devices of the same kind is used as the additional identifying information. The NOTIFY message is preferably written in XML format that has an adjustable tag.

After receiving an affirmative response message from the home networks (1-n) in response to the NOTIFY message, i.e., after receipt of 'service reception possible' message, the remote server RS provides the service.

Meanwhile, the service root SR connected to the Internet 10 allocates a global IP address to the home networks (1-n), and stores the IDs (e.g. URLs) of the home networks (1-n) and the global IP addresses allocated to the home networks (1-n).

After receiving the NOTIFY message from the remote server RS, the service root SR checks whether the home network recorded in the NOTIFY message is the subscribed home network.

If the recorded home network is the subscriber home network, the service root SR converts the home ID of the NOTIFY message into a corresponding IP address and transmits the converted IP address.

The lookup server LS of the home network receives the NOTIFY message from the service root SR.

The lookup server LS has the database as shown in Figure 2.

The database of the lookup server LS stores and maintains relevant information about the devices connected in the home network inclusive of additional identifying information that corresponds with the remote server RS, such as the IDs, dynamic IP addresses, device type, device property, user name, vendor, model name, serial numbers, etc. The table generated in this way is updated during re-construction of the home network.

The lookup server LS further registers in the service root SR the IDs of the home networks and the global IP addresses currently allocated to the home networks, thereby enabling the communication between the home networks and the outside.

The lookup server LS searches the database for a device corresponding to the additional identifying information recorded in the received NOTIFY message.

If there is the device corresponding to the additional identifying information recorded in the NOTIFY message, the NOTIFY message is transmitted to the dynamic IP address of the corresponding device. There can be one, or more than one corresponding device.

Next, a method for providing the devices within the home network with the service will be described.

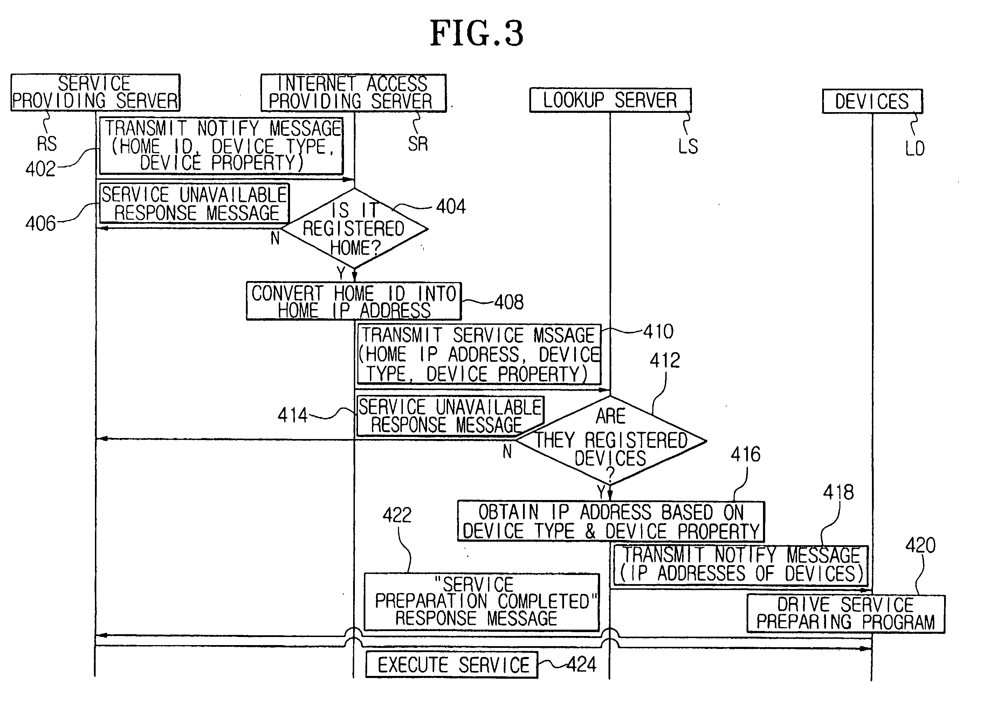

Figure 3 is a flowchart for explaining the method for providing the home network with the service in accordance with the preferred embodiment of the present invention.

Here, let us suppose the remote server RS is the server that periodically provides the latest entertainment and sports news, and the ID of the subscriber home network is 'Samsung 1'. Let us also suppose that the subscriber device is a computer having a resolution of 1280 x 720p.

Prior to providing the service, the remote server RS transmits a NOTIFY message to the service root SR (step S402). The NOTIFY message records the ID of the home network to which the device corresponding to the additional identifying information belongs. The additional identifying information identifies the service recipient device. The NOTIFY message is,

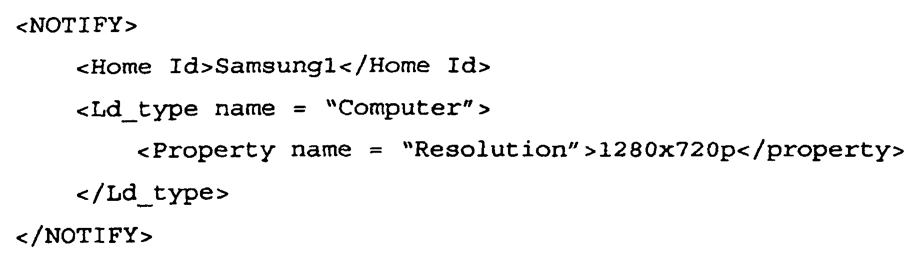

Next, the service root SR receives a response message transmitted from the remote server RS, and confirms whether the home network designated by the received response message is a home network that is subscribed to the service root SR (step S404).

If the home network designated by the received response message is not subscribed to the service root SR, then the response message 'Service Provision Impossible' is transmitted (step S406).

If the home network designated by the received response message is determined to be the home network subscribed to service root SR in S404, the service root SR converts the ID of the home network designated by the NOTIFY message into the IP address of the corresponding home network (step S408), and transmits a NOTIFY message to the corresponding home network (step S410). The NOTIFY message contains the type and characteristic information about the service recipient device. The NOTIFY message also contains the IP address of the home network to which the service recipient device belongs. The NOTIFY message is,

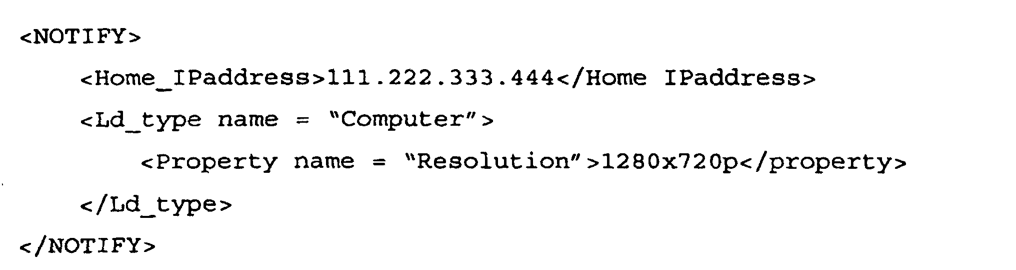

Accordingly, the lookup server LS of the home network receives the NOTIFY message transmitted from the service root SR, and determines, based on the additional identifying information about the device designated by the received NOTIFY message, whether the device is subscribed to the lookup server LS or not (step S412).

If the device corresponding to the additional identifying information contained in the received NOTIFY message is not subscribed to the lookup server LS, the response message, 'Service Provision Impossible' is transmitted to the remote server RS (step S414).

If the device corresponding to the additional identifying information contained in the received NOTIFY message is the device subscribed to the lookup server LS, the ID of the corresponding device is obtained, and also the dynamic IP address of such obtained ID is obtained (step S416).

If there are two devices corresponding to the additional identifying information, with the IDs of PC1 and PC2, respectively, the dynamic IP addresses of the devices having IDs of PC1 and PC2 are obtained through the database. Then, a NOTIFY message is transmitted to the dynamic IP addresses of the service recipient devices (step S418). In this case, the NOTIFY message is,

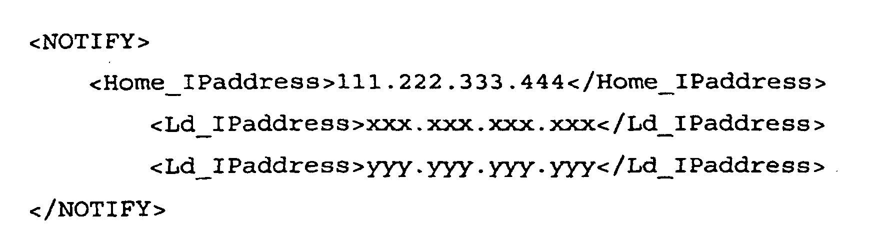

Here, the xxx.xxx.xxx.xxx is the IP address of the PC1, while yyy.yyy.yyy.yyy is the IP address of the PC2.

Accordingly, the service recipient devices that receive the NOTIFY message (i.e., devices PC1 and PC2) drive a service preparing program (step S420), and transmit to the remote server RS a response message (Result=SUCCESS, Reason=SERVICE_READY) indicating that they are ready for the service reception (step S422).

Then the remote server RS provides the responding devices with the corresponding service (step S424). In the description of the embodiment of the present invention, the algorithm for providing service between the service server and the client in a home is not mentioned. That is, the time that the service server begins to provide service according to the unforeseeable response of the client is not mentioned in the description of this embodiment.

As described above, with the system and method for providing the devices within the home network with service, since there is no need to maintain the information separately to distinguish one device from another device of the same type, a burden of information maintenance is lessened.

Further, when a device that is similar to the existing subscriber device is added to receive the same service as the existing subscriber device receives, there is no need to separately subscribe to the remote server RS. Further, since there is no leakage of information about the devices by the IDs that have been made during the subscription to the service, more strengthened security is guaranteed.

Although the preferred embodiment of the present invention has been described, it will be understood by those skilled in the art that the present invention should not be limited to the described preferred embodiment, but various changes and modifications can be made within the scope of the present invention as defined by the appended claims.

## Claims

1. A system for providing a home network with a service, the home network having a plurality of devices (LD1, LD2, ....Ldn) that are connected to one another, the system comprising:
a service providing server (RS) arranged to store address information about a home network (1-n) subscribed to the service, to store information about a service recipient device, **characterised in that** the service providing server (RS) is arranged to transmit a notifying message prior to providing the service to inquire about whether the service recipient device (LD) can receive the service or not, the notifying message containing address information about the home network that the service recipient device belongs to and additional identifying information about the service recipient device; and
a lookup server (LS) of the home network (1-n) arranged to store an ID and a dynamic internet protocol (IP) address of one of the plurality of devices that corresponds to the additional identifying information registered in the service providing server, to receive the notifying message from the service providing server, and in response to the notifying message, to determine whether there is a device (LD) corresponding to the additional identifying information contained in the notifying message, and if there is such a device, arranged to convert the ID of the corresponding device into an IP address and to transmit the converted IP address, wherein the service providing server (RS) is arranged to provide the service after receiving a response message from the service recipient device, the response message indicating that the service recipient device can receive the service.

2. A system according to claim 1, wherein the additional identifying information is used for one of the plurality of devices of a same kind that intends to receive a same type of service.

3. A system according to claim 1 or claim 2, wherein the additional identifying information includes information about at least one of a device type, a device property, a user name, a vendor, and a model name.

4. A system according to any of the above claims, wherein the service is a push service that provides a certain service to said at least one of the plurality of service recipient devices repeatedly in a predetermined period.

5. A method for providing a home network with a service, the home network having a plurality of devices (LD1, LD2, ....Ldn) that are connected to one another, the system comprising:
a service providing server (RS) storing address information about a home network (1-n) subscribed to the service and information about a service recipient device, **characterised in that** the service providing server (RS) transmits a notifying message prior to providing the service to inquire about whether the service recipient device (LD) can receive the service or not, the notifying message containing address information about the home network that the service recipient device belongs to and additional identifying information about the service recipient device; and
a lookup server (LS) of the home network (1-n) storing an ID and a dynamic internet protocol (IP) address of one of the plurality of devices that corresponds to the additional identifying information registered in the service providing server, **characterised in that** the lookup server (LS) receives the notifying message from the service providing server, and in response to the notifying message determining whether there is a device (LD) corresponding to the additional identifying information contained in the notifying message, and if there is such a device, the lookup server (LS) converts the ID of the corresponding device into an IP address and transmits the converted IP address, wherein the service providing server (RS) provides the service after receiving a response message from the service recipient device, the response message indicating that the service recipient device can receive the service.

6. A method according to claim 5, wherein the additional identifying information is used for one of the plurality of devices of a same kind that intends to receive a same type of service.

7. A method according to claim 5 or claim 6, wherein the additional identifying information includes information about at least one of a device type, a device property, a user name, a vendor, and a model name.

8. A method according to any one of claims 5-7, wherein the service is a push service that provides a certain service to said at least one of the plurality of service recipient devices repeatedly in a predetermined period.

## Patentansprüche

1. System, um ein Heim-Netzwerk mit einem Service auszustatten, wobei das Heim-Netzwerk eine Mehrzahl von Vorrichtungen (LD1, LD2 ... Ldn) besitzt, die untereinander verbunden sind und das System aufweist:
einen Service-Bereitstellungs-Server (RS), eingerichtet, um Adress-Informationen über ein Heim-Netzwerk (1-n), das am Service teilnimmt, zu speichern, Informationen über eine Service-Empfänger-Vorrichtung zu speichern, **dadurch gekennzeichnet, dass** der Service-Bereitstellungs-Server (RS) eingerichtet ist, um eine avisierende Meldung zu speichern, bevor der Service bereitgestellt wird, um abzufragen, ob die Service-Empfänger-Vorrichtung (LD) den Service annehmen kann, oder nicht, wobei die avisierende Meldung Adress-Informationen über das Heim-Netzwerk, zu dem die Service empfangende Vorrichtung gehört und zusätzliche identifizierende Informationen über die Service-Empfänger-Vorrichtung enthält; und
einen Lookup-Server (LS) des Heim-Netzwerks (1-n), der eingerichtet ist, eine ID und eine dynamische Internet-Protokoll-Adresse (IP) von einer aus der Mehrzahl von Vorrichtungen, die den zusätzlichen Identifizierungs-Informationen, die im Service-Bereitstellungs-Server registriert sind, entspricht, zu speichern, um die avisierende Meldung vom Service-Bereitstellungs-Server zu erhalten und um, als Antwort auf die avisierende Meldung, festzustellen, ob es eine Vorrichtung (LD) entsprechend den zusätzlichen Identifizierungs-Informationen, die in der avisierenden Meldung enthalten sind, gibt, und ob es eine solche Vorrichtung gibt, die eingerichtet ist, die ID der entsprechenden Vorrichtung in eine IP-Adresse zu konvertieren und die konvertierte IP-Adresse zu übertragen, wobei der Service-Bereitstellungs-Server (RS) eingerichtet ist, den Service, nach Erhalt einer Antwort-Meldung von der Service-Empfänger-Vorrichtung, bereitzustellen, wobei die Antwort-Meldung anzeigt, dass die Service-Empfänger-Vorrichtung den Service annehmen kann.

2. System nach Anspruch 1, wobei die zusätzliche Identifizierungs-Information für eine, aus der Mehrzahl von gleichartigen Vorrichtungen, die beabsichtigt, einen gleichartigen Service zu empfangen, genutzt wird.

3. System nach Anspruch 1 oder 2, wobei die zusätzliche Identifizierungs-Informationen, zumindest Informationen über einen Vorrichtungs-Typ, eine Vorrichtungs-Eigenschaft, einen Nutzer-Namen, einen Anbieter, oder einen Modell-Namen enthalten.

4. System nach einem der oben genannten Ansprüche, wobei der Service ein Push-Service ist, der einen bestimmten Service zu dieser mindestens einen aus der Mehrzahl von Service-Empfänger-Vorrichtungen wiederholt in einer vorgegebenen Periode bereitstellt.

5. Verfahren zur Ausstattung eines Heim-Netzwerks mit einem Service, wobei das Heim-Netzwerk eine Mehrzahl von Vorrichtungen (LD1, LD2 ... Ldn) besitzt, die untereinander verbunden sind und das System aufweist:
einen Service-Bereitstellungs-Server (RS), der Adress-Informationen über ein Heim-Netzwerk (1-n), dass am Service teilnimmt und Informationen, über eine Service-Empfänger-Vorrichtung, speichert, **dadurch gekennzeichnet, dass** der Service-Bereitstellungs-Server (RS) eine avisierende Meldung überträgt, bevor der Service bereitgestellt wird, um abzufragen, ob die Service-Empfänger-Vorrichtung (LD) den Service annehmen kann, oder nicht, wobei die avisierende Meldung Adress-Informationen über das Heim-Netzwerk, zu der die Service-Empfänger-Vorrichtung gehört und zusätzliche identifizierende Informationen über die Service-Empfänger-Vorrichtung, enthält; und
einen Lookup-Server (LS) des Heim-Netzwerks (1-n), der eine ID und eine dynamische Internet-Protokoll-Adresse (IP) von einer der Mehrzahl von Vorrichtungen speichert, die den zusätzlichen identifizierenden Informationen, die im Service-Bereitstellungs-Server registriert sind, entspricht, **dadurch gekennzeichnet, dass** der Lookup-Server (LS) die avisierende Meldung vom Service-Bereitstellungs-Server erhält und als Antwort auf die avisierende Meldung bestimmt, ob es eine Vorrichtung (LD) entsprechend den zusätzlichen identifizierenden Informationen, die in der avisierenden Nachricht enthalten sind, gibt, und wenn es eine solche Vorrichtung gibt, konvertiert der Lookup-Server (LS) die ID der entsprechenden Vorrichtung in eine IP-Adresse und überträgt die konvertierte IP-Adresse, wobei der Service-Bereitstellungs-Server (RS) den Service bereitstellt, nachdem eine Antwort-Meldung von der Service-Empfänger-Vorrichtung empfangen wurde, wobei die Antwort-Meldung anzeigt, dass die Service-Empfänger-Vorrichtung den Service annehmen kann.

6. Verfahren gemäß Anspruch 5, worin die zusätzlichen identifizierenden Informationen, für eine aus der Mehrzahl von gleichartigen Vorrichtungen, die beabsichtigt, den gleichen Typ von Service anzunehmen, genutzt wird.

7. Verfahren entsprechend Anspruch 5 oder Anspruch 6, wobei die zusätzlichen identifizierenden Informationen zumindest Informationen über einen Vorrichtungs-Typ, eine Vorrichtungs-Eigenschaft, einen Nutzer-Namen, einen Anbieter, oder einen Modell-Namen, enthalten.

8. Verfahren entsprechend jedem der Ansprüche 5-7, wobei der Service ein Push-Service ist, der einen bestimmten Service zu zumindest dieser einen aus der Mehrzahl von Service-Empfänger-Vorrichtungen, in einer festgelegten Periode, wiederholt bereitstellt.

## Revendications

1. Système permettant de fournir des services à un réseau domestique, le réseau domestique comportant une pluralité de dispositifs (LD1, LD2, ..., LDn) reliés les uns aux autres, le système comprenant :
un serveur fournisseur de services (RS) conçu pour enregistrer des informations d'adressage concernant un réseau domestique (1-n) enregistré pour le service, pour enregistrer des informations concernant un dispositif bénéficiant de services, **caractérisé en ce que** le serveur fournisseur de services (RS) est conçu pour émettre un message de notification avant de fournir les services, afin de vérifier si le dispositif bénéficiant de services (LD) peut recevoir les services ou non, le message de notification contenant des informations d'adressage concernant le réseau domestique dont le dispositif bénéficiant de services fait partie, et des informations supplémentaires d'identification concernant le dispositif bénéficiant de services ; et
un serveur de consultation (LS) du réseau domestique (1-n) conçu pour enregistrer une identification et une adresse dynamique de protocole internet (IP) d'un des dispositifs parmi la pluralité, qui correspond aux informations supplémentaires d'identification enregistrées dans le serveur fournisseur de services, pour recevoir le message de notification issu du serveur fournisseur de services, et en réponse au message de notification, pour déterminer s'il existe un dispositif (LD) correspondant aux informations supplémentaires d'identification contenues dans le message de notification, et si ce dispositif existe, converti l'identification dudit dispositif en adresse d'IP et transmettre l'adresse d'IP convertie, moyennant quoi le serveur fournisseur de services (RS) est conçu pour fournir les services après réception d'un message de réponse issu d'un dispositif bénéficiant de services, le message de réponse indiquant que le dispositif bénéficiant de services peut recevoir les services.

2. Système selon la revendication 1 dans lequel les informations supplémentaires d'identification concernent un dispositif parmi une pluralité de dispositifs du même genre qui cherche à obtenir un même type de service.

3. Système selon la revendication 1 ou la revendication 2 dans lequel les informations supplémentaires d'identification comprennent des informations concernant au moins une des choses suivantes : type de dispositif, une propriété du dispositif, un nom d'utilisateur, un vendeur et un nom du modèle.

4. Système selon l'une quelconque des revendications précédentes dans lequel le service est un service de distribution qui fournit un certain service audit au moins un dispositif parmi la pluralité de dispositifs bénéficiant des services de manière répétée au cours d'une durée prédéterminée.

5. Procédé permettant de fournir des services à un réseau domestique, le réseau domestique comportant une pluralité de dispositifs (LD1, LD2, ..., LDn) qui sont reliés les uns aux autres, le système comprenant :
un serveur fournisseur de services (RS) qui enregistre des informations d'adressage concernant un réseau domestique (1-n) enregistré pour le service et des informations concernant un dispositif bénéficiant de services, **caractérisé en ce que** le serveur fournisseur de services (RS) émet un message de notification avant de fournir les services, afin de vérifier si le dispositif bénéficiant de services (LD) peut recevoir les services ou non, le message de notification contenant des informations d'adressage concernant le réseau domestique dont le dispositif bénéficiant de services fait partie et des informations supplémentaires d'identification concernant le dispositif bénéficiant de services ; et
un serveur de consultation (LS) du réseau domestique (1-n) qui enregistre une identification et une adresse dynamique de protocole internet (IP) d'un des dispositifs parmi la pluralité, qui correspond aux informations supplémentaires d'identification enregistrées dans le serveur fournisseur de services, **caractérisé en ce que** le serveur de consultation (LS) reçoit le message de notification issu du serveur fournisseur de services, et en réponse au message de notification, **en ce qu'**il détermine s'il existe un dispositif (LD) correspondant aux informations supplémentaires d'identification contenues dans le message de notification, et si ce dispositif existe, le serveur convertit l'identification du dispositif en question en adresse d'IP et il transmet l'adresse d'IP convertie, moyennant quoi le serveur fournisseur de services (RS) est conçu pour fournir les services après réception d'un message de réponse issu d'un dispositif bénéficiant de services, le message de réponse indiquant que le dispositif bénéficiant de services peut recevoir les services.

6. Procédé selon la revendication 5, dans lequel les informations supplémentaires d'identification concernent l'un des dispositifs parmi une pluralité de dispositifs du même genre, qui cherche à recevoir un même type de service.

7. Procédé selon la revendication 5 ou la revendication 6 dans lequel les informations supplémentaires d'identification comprennent des informations concernant au moins une des choses suivantes : type de dispositif, une propriété du dispositif, un nom d'utilisateur, un vendeur et un nom du modèle.

8. Procédé selon l'une quelconque des revendications 5 à 7 dans lequel le serveur est un serveur de distribution qui fournit un certain service de manière répétée au cours d'une durée prédéterminée audit au moins un dispositif parmi la pluralité de dispositifs bénéficiant des services.
